# EUROPÄISCHE PATENTSCHRIFT

(11) **EP 3 308 887 B1**
(45) Veröffentlichungstag und Bekanntmachung des Hinweises auf die Patenterteilung: **19.06.2019**
(21) Anmeldenummer: 17203845.7
(22) Anmeldetag: 05.07.2016
(51) Int. Cl.: B23B 31/28, B23Q 3/12

(54) **SPANNEINHEIT**
CLAMPING UNIT
UNITÉ DE SERRAGE

(43) Veröffentlichungstag der Anmeldung: 18.04.2018
(62) Teilanmeldung aus: 16177888.1
(73) Patentinhaber: Narr Beteiligungs GmbH, 73119 Zell unter Aichelberg (DE)
(72) Erfinder: Brosowsky, Paul, 73066 Uhingen (DE); Trebes, Herbert, 73614 Schorndorf (DE)
(74) Vertreter: Ruckh, Rainer Gerhard

(56) Entgegenhaltungen:
- EP-A1- 2 868 410
- EP-A1- 2 939 773
- DE-A1-102007 048 121
- DE-U1-202012 102 578
- US-A- 1 534 572
- US-A- 4 567 794

## Beschreibung

Die Erfindung betrifft eine Spanneinheit gemäß dem Oberbegriff des Patentanspruchs 1.

Derartige Spanneinheiten werden allgemein zum stationären Spannen von Werkstücken in Bohr- und Fräsmaschinen sowie in Bearbeitungszentren und auch zur Betätigung von Spannfuttern für Werkstücke bei rotativen Bearbeitungen in Dreh-, Schleif- und Rundtaktmaschinen eingesetzt.

Spanneinheiten der genannten Art weisen typischerweise hydraulische Antriebseinheiten auf, um die zum Spannen oder Lösen von Werkstücken notwendigen Spannkräfte zu erzeugen. Derartige Hydraulikeinheiten weisen jedoch abgesehen von deren hohem konstruktiven Aufwand auch den Nachteil auf, dass diese auf Schaltsignale relativ träge reagieren, so dass Anwendungen problematisch sind, bei welchen zum Beispiel aus Produktivitätsgründen sehr schnelle und präzise Bewegungen von Spannsystemen zur Durchführung von Spannvorgängen oder Lösevorgängen gefordert werden.

Aus der DE 20 2013 101 345 U1 ist eine Magnetspannvorrichtung bekannt, welche eine Spannfläche, wenigstens ein elektromagnetisches Spannmittel zum Aufspannen eines Werkstücks in der Spannfläche und eine Zentriervorrichtung zum Zentrieren des Werkstücks aufweist, wobei die Zentriervorrichtung wenigstens eine in der Spannfläche verschiebbare Grundspannbacke aufweist. Der Grundspannbacke ist eine bezüglich der Spannfläche in eine abgesenkte oder angehobene Position bewegbare Spannbacke zugeordnet. Die Spannbacke weist einen gesonderten Antrieb, insbesondere einen pneumatischen, hydraulischen, mechanischen, magnetischen, insbesondere elektromagnetischen, elektromotorischen oder manuellen Hubantrieb auf. Die Verwendung elektromotorischer Antriebe ist dort nur pauschal erwähnt.

Die US 4 567 794 A offenbart eine Spanneinheit gemäß dem Oberbegriff des Patentanspruchs 1 zum Spannen von Werkstücken. Die Spannvorrichtung weist einen Motor und eine Getriebeeinheit mit einer Anordnung von Rollen auf. Die Getriebeeinheit setzt eine Rotationsbewegung in eine Translationsbewegung eines Betätigungselements um, wodurch Spannelemente gelöst oder gespannt werden können.

Die DE 20 2012 102 578 U1 betrifft eine Magnetspannvorrichtung mit einer Spannfläche, wenigstens einem magnetisch wirkenden Spannmittel zum Aufspannen eines Werkstücks auf der Spannfläche und einer Zentriervorrichtung zum Zentrieren des Werkstückes mit zwei oder mehr in der Spannfläche verschiebbaren Spannbacken. Der Zentriervorrichtung ist ein einen Stator und einen Rotor aufweisender elektrischer Rotationsantrieb in einer Rotationsachse zugeordnet. Die Zentriervorrichtung weist Mittel zum Ableiten von linearen Spannbackenbewegungen aus einer Rotationsbewegung des Rotationsantriebes auf. Die DE 10 2007 048 121 A1 betrifft eine Schutzvorrichtung für eine Werkzeugmaschine zur Bearbeitung von Werkstücken, mit einem mindestens eine Spannfläche zum Spannen eines Spannobjekts, insbesondere eines Werkzeugs oder eines Werkstücks, aufweisenden Spannkörper und mit einer Sensoranordnung zur Messung einer Planlage einer Spannobjektfläche des Spannobjekts.

Der Erfindung liegt die Aufgabe zugrunde, eine Spanneinheit bereitzustellen, welche bei konstruktiv geringem Aufwand eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Spanneinheit zum Spannen eines Werkstücks mit einem einen Stator und einen Rotor aufweisenden elektrischen Antrieb und einer eine Anordnung von Wälzkörpern aufweisenden Getriebeeinheit. Letztere dient dazu, eine Rotationsbewegung in eine Translationsbewegung eines Betätigungselements umzusetzen. Durch Translationsbewegungen des Betätigungselements sind Spannelemente in eine Spannstellung, in welcher ein Werkstück mit den Spannelementen gespannt ist, und in eine Lösestellung, in welcher die Spannelemente das Werkstück freigeben, einbringbar. Die Wälzkörper sind in Umfangsrichtung des Rotors verteilt angeordnet. Kontrollmittel sind zur Überwachung von Spannstellung und Spannkraft vorgesehen. Die Kontrollmittel weisen eine dem elektrischen Antrieb zugeordnete Regeleinheit auf.

Gegebenenfalls kann die Spanneinheit auch so ausgebildet sein, dass das Betätigungselement rotative Bewegungen ausführt.

Erfindungsgemäß wird somit eine elektromechanische Spanneinheit bereitgestellt, die bei einem kompakten, kostengünstigen Aufbau ein reproduzierbares, genaues Spannen von Werkstücken ermöglicht, wobei insbesondere auch schnelle Spannvorgänge exakt durchgeführt werden können, da der elektrische Antrieb der Spanneinheit im Gegensatz zu hydraulischen Antriebseinheiten weniger trägheitsbehaftet ist.

Ein wesentlicher Aspekt der Erfindung besteht in der Kombination des elektrischen Antriebs mit der über eine Anordnung von Wälzkörpern verfügenden Getriebeeinheit. Diese Getriebeeinheit weist einen kompakten Aufbau auf und gewährleistet eine präzise und reproduzierbare Umsetzung der Rotationsbewegung des Rotors des elektrischen Antriebs in eine Translationsbewegung des Betätigungselements, das auf das Spannsystem einwirkt. Da die Wälzkörper unmittelbar in Eingriff mit dem Betätigungselement sind und das Betätigungselement unmittelbar auf die Spannelemente zur Durchführung von Spannvorgängen einwirkt, ist nur eine geringe Anzahl von Bauteilen notwendig, um die Rotationsbewegungen in Translationsbewegungen für die Spann- und Lösevorgänge des Werkstücks umzusetzen. Dadurch weist die Spanneinheit einen kompakten und kostengünstigen Aufbau auf.

Ein weiterer Vorteil der Erfindung besteht darin, dass mit der Getriebeeinheit ein Spannen des Werkstücks sowohl durch Zugbewegungen als auch durch Drehbewegungen, die auf die Spannelemente ausgeübt werden, bewirkt wird, wobei besonders vorteilhaft ist, dass bei den Zug- und Drehbewegungen dieselben Kräfte durch den elektrischen Antrieb generiert werden, so dass mit beiden Bewegungsarten dieselbe Präzision beim Spannen und Lösen erhalten wird.

Bei einer Ausführungsform, bei der Spannvorgänge durch Drehbewegungen des Betätigungselements erreicht werden, kann das Betätigungselement von einer Druckhülse oder dergleichen gebildet sein. Bei einer Ausführungsform, bei welcher das Spannen durch Zugwirkung erfolgt, kann das Betätigungselement vorteilhaft von einer Zugstange gebildet sein.

Gemäß der Erfindung sind bei der Spanneinheit Kontrollmittel zur Überwachung der Spannstellung und der beim Spannen auf das zu spannende Werkstück ausgeübten Spannkraft vorgesehen.
Mit diesen Kontrollmitteln kann sowohl die Spannkraft als auch die Spannstellung auf elektronischem Weg kontrolliert und eingestellt werden. Damit können aus Toleranzvorgaben resultierende Maßabweichungen bei Werkstücken und Komponenten der Spanneinheit ausgeglichen werden, um für jedes Werkstück einen optimalen und reproduzierbaren Spannvorgang zu erhalten. Damit wird die Funktionalität der erfindungsgemäßen Spanneinheit erheblich erhöht.

Die Kontrollmittel weisen eine dem elektrischen Antrieb zugeordnete Regeleinheit auf.

Die Regeleinheit ist vorteilhaft als Softwaremodul in einer Rechnereinheit implementiert. Die Rechnereinheit kann im elektrischen Antrieb integriert oder als separate Einheit ausgebildet sein. Durch die Vorgabe von Sollwerten für die Spannkraft und die Spannstellung kann für jedes Werkstück der Spannvorgang individuell angepasst werden. Durch die Regelung von Spannkraft und/oder Spannstellung kann der Spannvorgang optimiert werden.

Gemäß einer ersten Variante erfolgt mit der Regeleinheit eine Strom- oder Drehmomentregelung des elektrischen Antriebs.

Diese Variante erfordert einen äußerst geringen konstruktiven Aufwand, da die Regelungsvorgänge allein in Abhängigkeit interner Größen des elektrischen Antriebs erfolgen. Hierbei wird der Umstand ausgenutzt, dass der Strom und das Drehmoment des elektrischen Antriebs charakteristische Größen für den Spannvorgang des Werkstücks bilden.

Gemäß einer zweiten Variante erfolgt eine Regelung in Abhängigkeit von Sensorsignalen wenigstens eines Kraftsensors.

Der Vorteil dieser Variante besteht darin, dass mit den Kraftsensoren direkt und unmittelbar ein Maß für die aktuelle Spannkraft als Messwert erhalten wird, anhand dessen ein besonders einfacher Regelvorgang durchgeführt werden kann. Gemäß einer weiteren vorteilhaften Ausgestaltung der Erfindung ist zur Überwachung der Spannstellung wenigstens ein Sensor vorgesehen.

Insbesondere ist der Sensor ein Näherungsschalter oder ein lineares Wegmesssystem.

Mit diesen Sensoren kann beispielsweise erkannt werden, dass ein Werkstück, dessen Istmaße von den Sollmaßen abweichen, in der Spannstellung nicht richtig positioniert ist. Dies ist insbesondere dann der Fall, wenn das Werkstück etwas kleiner ist als es die Sollgröße für dieses Werkstück vorgibt. Dasselbe gilt auch für das Werkstück in der Lösestellung. Die so erkannten Fehlstellungen können dann durch eine entsprechende Einstellung der Werkstück-Position korrigiert werden.

Gemäß einer weiteren vorteilhaften Ausführungsform sind Werkstückanlagenkontrollmittel vorgesehen, mittels derer die Lage des Werkstücks relativ zu einer Anlagefläche kontrollierbar ist.

Vorteilhaft weisen die Werkstückanlagenkontrollmittel eine Anordnung von induktiven oder kapazitiven Sensoren auf.

Dadurch wird eine weitere wesentliche Kontrollmaßnahme bereitgestellt, mittels derer der Spannvorgang eines Werkstücks weiter optimiert werden kann. Durch diese Werkstückanlagenkontrollmittel kann überwacht werden, ob das jeweilige Werkstück korrekt auf einer Anlagefläche aufliegt. Vorteilhaft wird dabei mit den induktiven oder kapazitiven Sensoren an unterschiedlichen Messstellen der Abstand des Werkstücks zur Anlagefläche ermittelt. Damit können Fehlstellungen des Werkstücks genau erfasst und korrigiert werden.

Gemäß einer vorteilhaften Ausgestaltung der Erfindung ist das Halten der Spannkraft zum Spannen des Werkstücks durch eine Selbsthemmung der Getriebeeinheit bewirkt.

Durch die Selbsthemmung des elektrischen Antriebs wird die Spannkraft auch dann sicher gehalten, wenn der elektrische Antrieb ausgeschaltet ist. Damit kann der elektrische Antrieb ausgeschaltet bleiben, solange keine Zustandsänderungen an der Spanneinheit durchgeführt werden, wodurch eine erhebliche Energieeinsparung erzielt wird.

Gemäß einer besonders vorteilhaften Ausführungsform der Erfindung weist die Spanneinheit ein Grundmodul, in dem der elektrische Antrieb, die Getriebeeinheit und das Betätigungselement integriert sind, und einen Wechseleinsatz mit dem eigentlichen Spannsystem auf.

Dabei können Wechseleinsätze mit unterschiedlichen Spannelementen an dem Grundmodul anbringbar sein.

Die so konfigurierte Spanneinheit bildet ein modulares System, das einfach und flexibel an unterschiedliche Applikationen angepasst werden kann. Das modulare System ist dabei so aufgebaut, dass das Grundmodul mit dem elektrischen Antrieb, der Getriebeeinheit und dem Betätigungselement eine universelle Einheit bildet, an welcher unterschiedliche Wechseleinsätze als applikationsspezifische Bauteile befestigt werden können. Die Wechseleinsätze weisen dabei unterschiedliche Spannelemente zum Spannen unterschiedlicher Werkstücke auf, wobei insbesondere Wechseleinsätze für eine Innenspannung und auch Wechseleinsätze für eine Außenspannung von Werkstücken vorgesehen sein können.

Die Erfindung wird im Folgenden anhand der Zeichnungen erläutert. Es zeigen:
- Figur 1:: Perspektivische Darstellung der erfindungsgemäßen Spanneinheit mit einem Grundmodul und einem Wechseleinsatz
a) bei am Grundmodul in einer Sollposition fixiertem Wechseleinsatz
b) bei einem gegenüber der Sollposition gedrehten Wechseleinsatz
c) bei vom Grundmodul abgenommenem Wechseleinsatz
- Figur 2:: Längsschnittdarstellung der Spanneinheit gemäß Figur 1.
- Figur 3:: Detaildarstellung der Spanneinheit mit dem Vorderende der Zugstange und einer Kugel als Klemmelement
a) bei gespanntem Werkstück
b) bei gelöstem Werkstück
c) bei gelöstem Wechseleinsatz

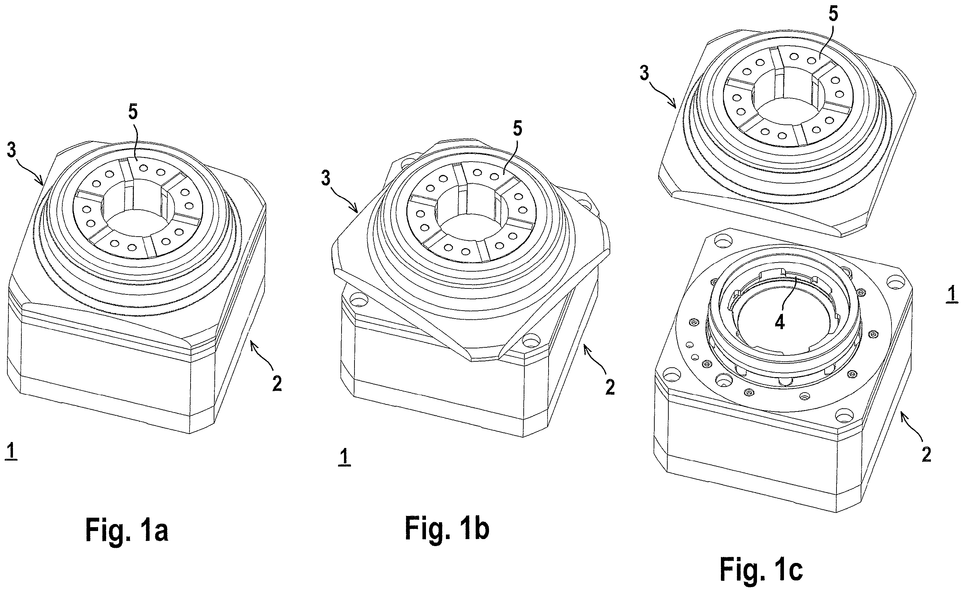

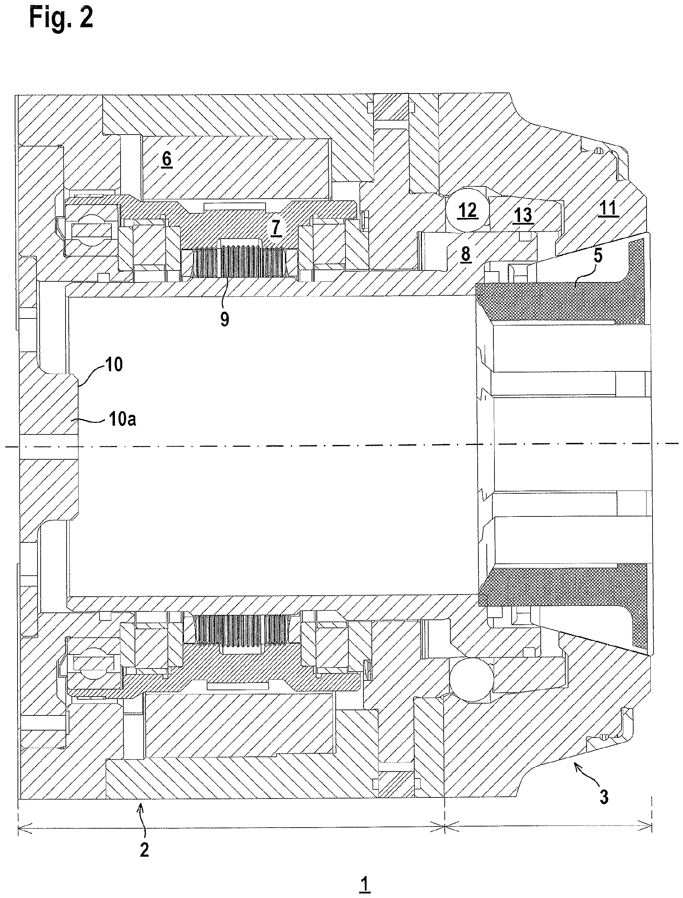

Die Figuren 1a bis 1c sowie 2 zeigen ein Ausführungsbeispiel der erfindungsgemäßen Spanneinheit 1 zum Spannen von Werkstücken.

Wie insbesondere die Figuren 1a bis 1c zeigen, weist die Spanneinheit 1 einen modularen Aufbau derart auf, dass an einem Grundmodul 2 ein Wechseleinsatz 3 reversibel lösbar befestigt werden kann. Dabei bildet das Grundmodul 2 ein universelles Modul, an dem unterschiedliche Wechseleinsätze 3 befestigt werden können. Die Fixierung des Wechseleinsatzes 3 am Grundmodul 2 erfolgt mittels eines Bajonettverschlusses. In Figur 1c sind Verschlusselemente 4 dieses Bajonettverschlusses am Grundmodul 2 sichtbar.

Jeder Wechseleinsatz 3 weist im Regelfall mehrere Spannelemente 5 zum Spannen eines Werkstücks auf. Die einzelnen Wechseleinsätze 3 unterscheiden sich durch die Ausbildung der Spannelemente 5. In dem Beispiel der Figuren 1a bis 1c bilden die Spannelemente 5 einen Spannkopf für eine Außenspannung eines Werkstücks. Generell können Wechseleinsätze 3 auch Spannsysteme aufnehmen, deren Gestaltung und Funktionsweise eine Innenspannung des Werkstücks ermöglicht.

Figur 1a zeigt den Wechseleinsatz 3 in seiner Sollposition am Grundmodul 2. Wenn der Wechseleinsatz 3 in dieser Sollposition am Grundmodul 2 befestigt ist, ist die Spanneinheit 1 komplett montiert zur Durchführung von Spannvorgängen eines Werkstücks. Zum Lösen des Wechseleinsatzes 3 wird dieser gegenüber dem Grundmodul 2 gedreht (Figur 1b) und dann abgenommen (Figur 1c). Danach kann beispielsweise ein anderer Wechseleinsatz 3 am Grundmodul 2 befestigt werden.

Wie aus Figur 2 ersichtlich, ist in dem Grundmodul 2 der Spanneinheit 1 ein elektrischer Antrieb integriert, der beispielsweise von einem Servomotor gebildet ist. Der elektrische Antrieb wird von einer nicht dargestellten Rechnereinheit gesteuert. Er verfügt in bekannter Weise über einen stationär im Grundmodul 2 gelagerten Stator 6 und einen drehbaren Rotor 7. Der Rotor 7 ist im Innenraum des hohlzylindrischen Stators 6 um eine Achse, die mit der Symmetrieachse des Grundmoduls 2 zusammenfällt, drehbar gelagert.

Zur Durchführung von Spannvorgängen ist ein Betätigungselement in Form einer Zugstange 8 vorgesehen, die Bestandteil einer dem elektrischen Antrieb zugeordneten Getriebeeinheit ist. Die Zugstange 8 bildet einen hohlzylindrischen Körper, dessen vorderes verbreitertes Ende über den dem Wechseleinsatz 3 zugeordneten Rand des Grundmoduls 2 hervorsteht.

Die Getriebeeinheit wird komplettiert durch die Anordnung von Wälzkörpern 9, die in Umfangsrichtung des Rotors 7 beziehungsweise der Zugstange 8 verteilt angeordnet sind. Die Wälzkörper 9 sind einerseits in Eingriff mit dem Rotor 7 und andererseits mit einem Gewinde an der Außenseite der Zugstange 8. Die Längsachsen der Wälzkörper 9 verlaufen parallel zur Symmetrieachse des Grundmoduls 2. Durch die Drehbewegung des Rotors 7 drehen die Wälzkörper 9 und erzeugen durch den Eingriff am Gewinde der Zugstange 8 eine Translationsbewegung der Zugstange 8, die zum Spannen beziehungsweise Lösen des Werkstücks im Spannkopf dient.

Figur 2 zeigt die Situation von Figur 1a, in der der Wechseleinsatz 3 in seiner Sollposition am Grundmodul 2 gelagert ist. Der Wechseleinsatz 3 ist dabei an der Stirnfläche des Grundmoduls 2 gelagert. Am hinteren Rand des Grundmoduls 2 befindet sich eine Anschlaggrundplatte 10, deren ebene Oberseite eine Anlagefläche 10a ausbildet, auf welcher das zu spannende Werkstück mit seinem hinteren, in den Hohlraum der Zugstange 8 ragenden Ende aufgesetzt werden kann. Je nach Größe des Werkstücks kann auf die Anlagefläche 10a auch ein nicht dargestellter Adapter aufgesetzt werden, auf welchem das Werkstück rückseitig gelagert werden kann.

Wie aus Figur 2 weiter ersichtlich, weist der Wechseleinsatz 3 einen Futterkörper 11 auf, der über eine an seinem vorderen Rand ausmündende konische Aussparung verfügt, in der die den Spannkopf bildenden Spannelemente 5 gehalten werden. Der Futterkörper 11 weist auch an seinem hinteren Rand eine Öffnung auf, in welche das verbreiterte vordere Ende der Zugstange 8 ragt.

Im Grundmodul 2 ist eine Anordnung von identisch ausgebildeten Kugeln 12 gelagert, welche Klemmelemente bilden, mittels derer eine Klemmverbindung zwischen Grundmodul 2 und Wechseleinsatz 3 hergestellt wird. Die Kugeln 12 bilden eine ringförmige Anordnung, die in Umfangsrichtung des Grundmoduls 2 umlaufend in jeweils gleichen Abständen zueinander angeordnet sind. Die Anzahl der Kugeln 12 ist abhängig von der Größe des Grundmoduls 2.

Wie Figur 2 zeigt, sind die Kugeln 12 zwischen Segmenten des Grundmoduls 2 und des Futterkörpers 11 gelagert. Weiterhin liegen die Kugeln 12 auch an der Umfangsfläche der Zugstange 8 an. Zur korrekten Ausrichtung der Kugeln 12 sind kegelförmige Ausrichtelemente 13 vorgesehen.

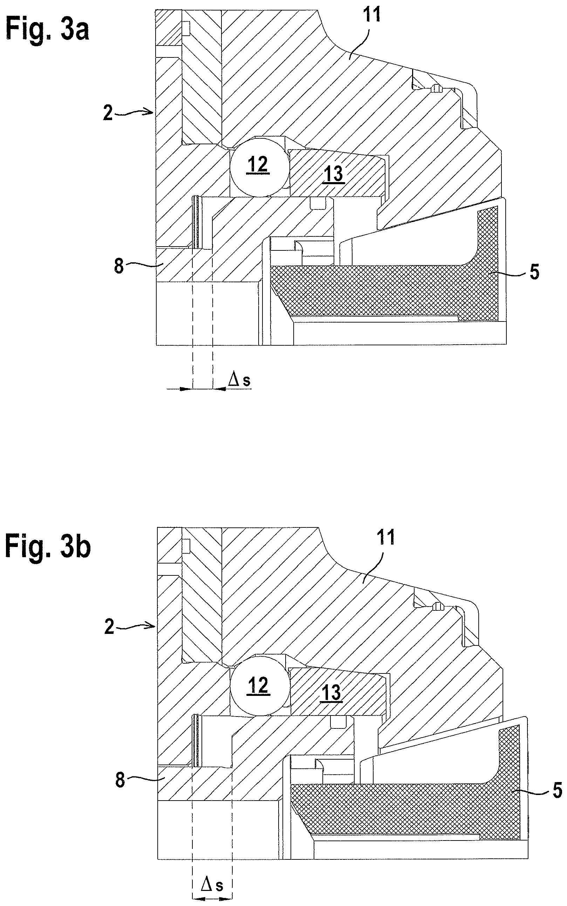

Die Funktionsweise der Spanneinheit 1 wird im Folgenden anhand der Figuren 3a bis 3c erläutert.

Mittels des elektrischen Antriebs wird die Zugstange 8 derart verfahren, dass die Spannelemente 5 des Spannkopfs zwischen einer Spannstellung und einer Lösestellung bewegt werden können, wobei während dieses Arbeitsbetriebs der Spanneinheit 1 der Wechseleinsatz 3 in seiner Sollposition am Grundmodul 2 durch die Klemmwirkung der Kugeln 12 fest gelagert ist.

Figur 3a zeigt die Spannstellung der Spannelemente 5, die dadurch erhalten wird, dass die Zugstange 8 mittels des elektrischen Antriebs in eine erste Sollposition eingebracht wird, in welcher die Zugstange 8 weit in das Grundmodul 2 eingefahren ist, so dass durch eine Zugwirkung der Zugstange 8 die Spannelemente 5 radial nach innen gefahren werden und so das (nicht dargestellte) Werkstück gespannt wird. In dieser Position ist der Abstand Δs der hinteren Flanke der Verbreiterung der Zugstange 8 zum gegenüberliegenden Wandsegment des Grundmoduls 2 minimal.

Die Kugeln 12 liegen dabei berührend an den jeweiligen Segmenten des Grundmoduls 2, am Futterkörper 11 und an der Zugstange 8 an und bewirken so die Klemmung zwischen Grundmodul 2 und Wechseleinsatz 3.

Die Getriebeeinheit ist selbsthemmend ausgebildet, so dass die Spannstellung auch bei ausgeschaltetem elektrischem Antrieb sicher gehalten wird.

Figur 3b zeigt die Lösestellung der Spannelemente 5, in welcher das Werkstück vom Spannkopf gelöst ist. Hierzu ist mittels des elektrischen Antriebs die Zugstange 8 in eine zweite Sollposition eingefahren, in welcher sie gegenüber der ersten Sollposition weiter nach vorne gefahren ist, so dass der Abstand Δs vergrößert ist. Durch das Einfahren der Zugstange 8 in die zweite Sollposition werden die Spannelemente 5 in radialer Richtung nach außen verlagert und geben das Werkstück frei.

Auch in der zweiten Sollposition der Zugstange 8 bleibt die Klemmwirkung der Kugeln 12 erhalten, so dass der Wechseleinsatz 3 am Grundmodul 2 weiterhin fixiert ist.

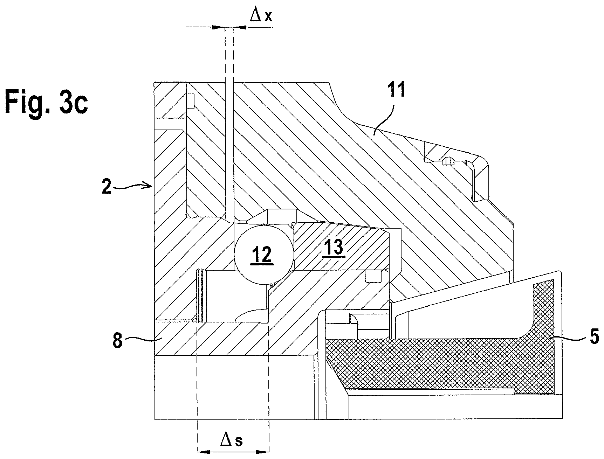

Schließlich kann, wie in Figur 3c dargestellt, mittels des elektrischen Antriebs die Zugstange 8 in eine dritte Sollposition noch weiter nach vorne gefahren werden, so dass der Abstand Δs nun seinen Maximalwert annimmt.

Dadurch entsteht zwischen den gegenüberliegenden Wänden des Grundmoduls 2 und der Zugstange 8 ein Abstand Δx, und die Klemmwirkung der Kugeln 12 ist aufgehoben. Damit ist der Wechseleinsatz 3 von dem Grundmodul 2 gelöst und kann durch Betätigen des Bajonettverschlusses und Verdrehen gegenüber dem Grundmodul 2 (wie in Figur 1b dargestellt) gedreht und dann von diesem abgenommen werden (wie in Figur 1c dargestellt).

Der Betrieb der Spanneinheit 1 und insbesondere des elektrischen Antriebs wird mittels Kontrollmittel elektronisch überwacht und kontrolliert. Hierzu ist in der Rechnereinheit eine Regeleinheit implementiert, mit der die von den Spannelementen 5 ausgeübte Spannkraft und/oder die Spannstellung auf vorgegebene Sollwerte eingestellt wird.

Gemäß einer ersten Variante erfolgt mit der Regeleinheit eine Strom-/ Drehmomentregelung des elektrischen Antriebs, das heißt der Strom und das Drehmoment als interne Größen des elektrischen Antriebs werden zur Vorgabe von Sollwerten für die Regelungsvorgänge genutzt.

Zur Vorgabe von Sollwerten für die Spannkraft können auch Kraftsensoren eingesetzt werden, die im Futterkörper 11 angeordnet werden.

Zur Überwachung der Spannstellung können ebenfalls Sensoren eingesetzt werden. Hierzu eignen sich Näherungsschalter an den Endanschlägen der Zugstange 8. Alternativ können auch lineare Wegmesssysteme zur Anwendung gelangen. Durch diese Sensoren können Fehlfunktionen beim Spannen und Lösen des Werkstücks sicher detektiert werden. Weiterhin können zur Erfassung oder Kompensation der Fehlfunktionen Strombegrenzungen in der Regeleinheit vorgesehen sein.

Schließlich können Werkstückanlagenkontrollmittel vorgesehen sein, mittels derer die korrekte Anlage des Werkstücks an der Anlagefläche 10a der Anschlaggrundplatte 10 überprüft werden kann. Hierzu können induktive oder kapazitive Sensoren in der Anschlaggrundplatte 10 integriert werden, mittels derer ortsaufgelöst die Entfernungen zwischen Anlagefläche 10a und WerkstückOberfläche erfasst werden können.

### Bezugszeichenliste

- (1): Spanneinheit
- (2): Grundmodul
- (3): Wechseleinsatz
- (4): Verschlusselement
- (5): Spannelement
- (6): Stator
- (7): Rotor
- (8): Zugstange
- (9): Wälzkörper
- (10): Anschlaggrundplatte
- (10a): Anlagefläche
- (11): Futterkörper
- (12): Kugel
- (13): Ausrichtelement

## Patentansprüche

1. Spanneinheit (1) zum Spannen eines Werkstücks mit einem einen Stator (6) und einen Rotor (7) aufweisenden elektrischen Antrieb und einer eine Anordnung von Wälzkörpern (9) aufweisenden Getriebeeinheit, wobei mit der Getriebeeinheit eine Rotationsbewegung in eine Translationsbewegung eines Betätigungselements umsetzbar ist, und wobei durch Translationsbewegungen des Betätigungselements Spannelemente (5) in eine Spannstellung, in welcher ein Werkstück mit den Spannelementen (5) gespannt ist, und in eine Lösestellung, in welcher die Spannelemente (5) das Werkstück freigeben, einbringbar ist, **dadurch gekennzeichnet, dass** die Wälzkörper (9) in Umfangsrichtung des Rotors (7) verteilt angeordnet sind, und dass Kontrollmittel zur Überwachung von Spannstellung und Spannkraft vorgesehen sind, wobei die Kontrollmittel eine dem elektrischen Antrieb zugeordnete Regeleinheit aufweisen.

2. Spanneinheit nach Anspruch 1, **dadurch gekennzeichnet, dass** das Betätigungselement eine Zugstange (8) ist.

3. Spanneinheit nach Anspruch 1 oder 2, **dadurch gekennzeichnet, dass** mit der Regeleinheit eine Strom- oder Drehmomentregelung des elektrischen Antriebs erfolgt.

4. Spanneinheit nach Anspruch 3, **dadurch gekennzeichnet, dass** mit der Regeleinheit eine Regelung in Abhängigkeit von Sensorsignalen wenigstens eines Kraftsensors erfolgt.

5. Spanneinheit nach einem der Ansprüche 1 bis 4, **dadurch gekennzeichnet, dass** zur Überwachung der Spannstellung wenigstens ein Sensor vorgesehen ist.

6. Spanneinheit nach Anspruch 5, **dadurch gekennzeichnet, dass** der Sensor ein Näherungsschalter oder ein lineares Wegmesssystem ist.

7. Spanneinheit nach einem der Ansprüche 1 bis 6, **dadurch gekennzeichnet, dass** Werkstückanlagenkontrollmittel vorgesehen sind, mittels derer die Lage des Werkstücks relativ zu einer Anlagefläche (10a) kontrollierbar ist.

8. Spanneinheit nach Anspruch 7, **dadurch gekennzeichnet, dass** das Werkstückanlagenkontrollmittel eine Anordnung von induktiven oder kapazitiven Sensoren aufweist.

9. Spanneinheit nach einem der Ansprüche 1 bis 6, **dadurch gekennzeichnet, dass** das Halten der Spannkraft zum Spannen des Werkstücks durch eine Selbsthemmung der Getriebeeinheit bewirkt ist.

10. Spanneinheit nach einem der Ansprüche 1 bis 11, **dadurch gekennzeichnet, dass** diese ein Grundmodul (2), in dem der elektrische Antrieb, die Getriebeeinheit und das Betätigungselement integriert sind, und einen Wechseleinsatz (3) mit darin angeordneten Spannelementen (5) aufweist.

## Claims

1. Clamping unit (1) for clamping a workpiece with an electric drive, which comprises a stator (6) and a rotor (7), and a transmission unit, which comprises an arrangement of roller bodies (9), wherein a rotational movement is convertible by the transmission unit into a translational movement of an actuating element and wherein clamping elements (5) can be brought by translational movements of the actuating element into a clamping setting in which a workpiece is clamped by the clamping elements (5) and a release setting in which the clamping elements (5) release the workpiece, **characterised in that** the roller bodies (9) are arranged in distribution in circumferential direction of the rotor (7) and that checking means for monitoring the clamping setting and clamping force are provided, wherein the checking means comprise a regulating unit associated with the electric drive.

2. Clamping unit according to claim 1, **characterised in that** the actuating element is a draw rod (8).

3. Clamping unit according to claim 1 or 2, **characterised in that** a current or torque regulation of the electric drive is carried out by the regulating unit.

4. Clamping unit according to claim 3, **characterised in that** a regulation in dependence on sensor signals of at least one force sensor is carried out by the regulating unit.

5. Clamping unit according to any one of claims 1 to 4, **characterised in that** at least one sensor is provided for monitoring the clamping setting.

6. Clamping unit according to claim 5, **characterised in that** the sensor is a proximity switch or a linear travel measuring system.

7. Clamping unit according to any one of claims 1 to 6, **characterised in that** workpiece installation checking means by means of which the position of the workpiece relative to a support surface (10a) can be checked are provided.

8. Clamping unit according to claim 7, **characterised in that** the workpiece installation checking means comprises an arrangement of inductive or capacitive sensors.

9. Clamping unit according to any one of claims 1 to 6, **characterised in that** maintenance of the clamping force for clamping the workpiece is produced by self-locking of the transmission unit.

10. Clamping unit according to any one of claims 1 to 9, **characterised in that** this comprises a base module (2), in which the electric drive, the transmission unit and the actuating element are integrated, and a change insert (3) with clamping elements (5) arranged therein.

## Revendications

1. Unité de serrage (1) pour serrer une pièce d'oeuvre, avec un entraînement électrique présentant un stator (6) et un rotor (7) et avec une unité de transmission présentant un arrangement d'éléments roulants (9), sachant que l'unité de transmission permet de transformer un mouvement de rotation en un mouvement de translation d'un élément d'actionnement, et sachant que, par des mouvements de translation de l'élément d'actionnement, des éléments de serrage (5) peuvent être mis dans une position de serrage, dans laquelle une pièce d'oeuvre est serrée par les éléments de serrage (5), et dans une position de libération, dans laquelle les éléments de serrage (5) libèrent la pièce d'oeuvre, **caractérisée en ce que** les éléments roulants (9) sont disposés en étant répartis dans la direction circonférentielle du rotor (7), et **en ce qu'**il est prévu des moyens de contrôle pour surveiller la position de serrage et la force de serrage, sachant que les moyens de contrôle présentent une unité de régulation associée à l'entraînement électrique.

2. Unité de serrage selon la revendication 1, **caractérisée en ce que** l'élément d'actionnement est une tige de traction (8).

3. Unité de serrage selon la revendication 1 ou 2, **caractérisée en ce que** l'unité de régulation effectue une régulation du courant ou du couple de rotation de l'entraînement électrique.

4. Unité de serrage selon la revendication 3, **caractérisée en ce que** l'unité de régulation effectue une régulation en fonction de signaux de capteur d'au moins un capteur de force.

5. Unité de serrage selon l'une des revendications 1 à 4, **caractérisée en ce qu'**il est prévu au moins un capteur pour la surveillance de la position de serrage.

6. Unité de serrage selon la revendication 5, **caractérisée en ce que** le capteur est un détecteur de proximité ou un système de mesure de déplacement linéaire.

7. Unité de serrage selon l'une des revendications 1 à 6, **caractérisée en ce qu'**il est prévu des moyens de contrôle du contact de la pièce, au moyen desquels la position de la pièce d'oeuvre par rapport à une surface de contact (10a) peut être contrôlée.

8. Unité de serrage selon la revendication 7, **caractérisée en ce que** le moyen de contrôle du contact de la pièce présente un arrangement de capteurs inductifs ou capacitifs.

9. Unité de serrage selon l'une des revendications 1 à 6, **caractérisée en ce que** le maintien de la force de serrage pour serrer la pièce d'oeuvre est produit par un autoblocage de l'unité de transmission.

10. Unité de serrage selon l'une des revendications 1 à 9, **caractérisée en ce que** celle-ci présente un module de base (2), dans lequel sont intégrés l'entraînement électrique, l'unité de transmission et l'élément d'actionnement, et un insert interchangeable (3) dans lequel sont disposés les éléments de serrage (5).
